# EUROPÄISCHE PATENTSCHRIFT

(11) **EP 1 541 390 B1**
(45) Veröffentlichungstag und Bekanntmachung des Hinweises auf die Patenterteilung: **14.02.2007**
(21) Anmeldenummer: 04024713.2
(22) Anmeldetag: 16.10.2004
(51) Int. Cl.: B60G 17/015, B62D 17/00

(54) **Anordnung für die Steuerung eines Radaufhängungslenkers über Piezokeramik-Elemente an der Mittellage des Lenkers**
Arrangement for the control of a suspension arm using piezoceramic elements at the interior of the arm
Système pour le réglage d'une biellette utilisant des élements piezocéramiques dans l'intérieur de la biellette

(30) Priorität: 12.12.2003 DE 10358228
(43) Veröffentlichungstag der Anmeldung: 15.06.2005
(73) Patentinhaber: AUDI AG, 85045 Ingolstadt (DE)
(72) Erfinder: Klein, Arndt, 85080 Gaimersheim (DE)
(74) Vertreter: Asch, Konrad

(56) Entgegenhaltungen:
- WO-A-03/106245
- DE-A1- 19 915 214
- US-A- 5 009 447
- US-A- 5 259 600
- US-A- 5 390 949
- US-A1- 2003 122 338
- PATENT ABSTRACTS OF JAPAN Bd. 2002, Nr. 02, 2. April 2002 (2002-04-02) -& JP 2001 301640 A (NISSAN MOTOR CO LTD), 31. Oktober 2001 (2001-10-31)
- PATENT ABSTRACTS OF JAPAN Bd. 010, Nr. 196 (M-497), 10. Juli 1986 (1986-07-10) & JP 61 041672 A (KAYABA IND CO LTD), 28. Februar 1986 (1986-02-28)
- PATENT ABSTRACTS OF JAPAN Bd. 013, Nr. 045 (M-792), 2. Februar 1989 (1989-02-02) & JP 63 251368 A (HINO MOTORS LTD), 18. Oktober 1988 (1988-10-18)
- PATENT ABSTRACTS OF JAPAN Bd. 010, Nr. 304 (M-526), 16. Oktober 1986 (1986-10-16) & JP 61 115769 A (KOYO SEIKO CO LTD), 3. Juni 1986 (1986-06-03)
- PATENT ABSTRACTS OF JAPAN Bd. 1998, Nr. 01, 30. Januar 1998 (1998-01-30) & JP 09 229787 A (TOYOTA MOTOR CORP), 5. September 1997 (1997-09-05)

## Beschreibung

Die Erfindung betrifft eine Anordnung für das über ein Steuergerät steuerbare Verändern von Spur- und/oder Sturzwinkeln eines Rades um kleine Beträge, dessen Radaufhängung Teil eines Kraftfahrzeug-Fahrwerkes ist.

Bekanntlich ist das Fahrverhalten von Kraftfahrzeugen herkömmlicher Bauart bestimmt von der dem aktiven Verhalten des Fahrers ausgesetzten Abstimmung des Lenksystems und der vorgegebenen Elastokinematik von Vorder- und Hinterachse des Fahrwerkes. Dabei stellen sich von den augenblicklichen Fahrwiderständen kraftgesteuert, also passiv und vom Fahrer oder von einem Steuerungssystem nicht zu beeinflussen, an den Rädern von Vorder- und Hinterachse des Kraftfahrzeuges Lenkwinkel ein, die die Fahrdynamik - Agilität -, die Fahrsicherheit - Lenk- und Bremsverhalten - und den Fahrkomfort - Fahrwerksschwingungen, Abrollkomfort - maßgeblich beeinflussen. Wie sich ein Kraftfahrzeug in verschiedenen Situationen verhält bzw. anfühlt, ist also immer abhängig von einem Kompromiss, der in aufwändiger Abstimmungsarbeit von Fahrdynamik und Fahrwerkakustik für jedes Kraftfahrzeug gefunden werden muss.

Zur Erhöhung von Fahrsicherheit und Fahrkomfort werden immer öfter Systeme zur aktiven Beeinflussung des Fahrverhaltens von Kraftfahrzeugen eingesetzt. Hierzu werden die Spur- und Sturzwinkel der Räder an der nicht gelenkten Hinterachse des Fahrwerkes situationsgebunden aktiv gesteuert. Die Steuerung hierfür übernimmt ein Steuergerät, das die Räder der Hinterachse bei schneller Kurvenfahrt z. B. deutlich anstellt, also den Sturzwinkel aktiv verändert, um eine bessere Querführung der betroffenen Achse des Fahrwerkes zu erwirken. Beim Bremsen werden die Räder der Hinterachse z. B. aktiv in Vorspur gelenkt, um die Fahrstabilität beim Bremsen zu verbessern. Die mit solchen Aktuatoren erreichbaren Lenkwinkel sind im Vergleich zu einer passiven Elastokinematik größer und zudem gezielt und ohne unerwünschte Nebeneffekte, da sie situationsgebunden gewollt aufgebracht werden.

Um die Radstellung eines Fahrwerkes aktiv zu beeinflussen müssen die Anlenkpunkte der betroffenen Radlenker in der Anlenkachse örtlich verschoben werden, wie dies z. B. durch das Lenkgetriebe über die Anlenkpunkte der Spurstange an der gelenkten Vorderachse eines Kraftfahrzeuges beim herkömmlichen Lenken erfolgt. In diesem Falle ist das Lenkgetriebe der Aktuator.

Lenkgetriebe für gelenkte Achsen sind relativ aufwändige und kostenintensive Baugruppen, da relativ große Lenkwinkel zu erzeugen sind. Für die vorstehend genannten Effekte an der nicht gelenkten Hinterachse werden dagegen infolge kleiner Winkeländerungen keine großen Arbeitshübe benötigt, sodass einfachere Systeme mit weniger Arbeitshub zum Einsatz kommen können. An der nicht gelenkten Hinterachse reichen nämlich - wie die Erfahrung gezeigt hat - Spurwinkeländerungen von einigen Winkelminuten und Sturzänderungen von einigen Winkelgraden aus. An einer gelenkten Vorderachse betragen dagegen die Lenkwinkel mindestens ± 30°.

Um die benötigten geringe Winkeländerungen zu bewirken, wurden bisher z. B. Excenter und Spindeln oder hydraulische Zylinder als Aktuatoren verwendet, die relativ aufwendig und störanfällig sind.

Aus der JP 2001 301 640 A ist eine Lenkwinkel-Steuerung bekannt. Die Anordnung umfasst ein steuerbares Steuergerät zum Verändern der Lenk- und/oder Sturzwinkel eines Rades, dessen Radaufhängung Teil eines Kraftfahrzeuges ist.

Der Erfindung liegt die Aufgabe zugrunde, eine Anordnung für das über ein Steuergerät steuerbare Verändern von Lenk- und/oder Sturzwinkel eines Rades um kleine Beträge, dessen Radaufhängung Teil eines Kraftfahrzeug-Fahrwerks ist gemäß dem Oberbegriff des Anspruchs 1 derart weiterzubilden, dass ein einfacher Aufbau der Anordnung gewährleistet ist.

Diese Aufgabe wird durch die kennzeichnenden Merkmale des Anspruches 1 in Verbindung mit seinen Oberbegriffsmerkmalen gelöst.

Hierzu weist die Anordnung ein Steuergerät auf, dessen aktives Bauteil eine mittels Steuersignalen erregbare Piezokeramik ist. Erfindungsgemäß ist die Piezokeramik als Teil eines den Anlenkpunkt eines Radlenkers lagernden, einen Lagerblozen umfassenden Elastomerlagers ausgebildet, um ein kraftgesteuertes örtliches Verschieben des den Anlenkpunkt bildenden Lagerbolzens quer zur Achsrichtung des Elastomerlagers zu ermöglichen.

Vorteilhafterweise ist das elastomere Lager als radial symmetrisches Lager mit von koaxialer Außen- und Innenhülse umschlossener Elastomerspur ausgebildet und ist ein den Anlenkpunkt bildender in Achsrichtung fixierter Lagerbolzen innerhalb des von der Innenhülse umschlossenen Raumes mittels Federpaketen und mindestens einer Piezokeramik im nicht erregten Zustand zentrisch gehalten.

Weitere Merkmale der Erfindung ergeben sich aus den Unteransprüchen.

Auf diese verblüffend einfache und betriebssichere Weise können ohne Änderung der vorgegebenen Achskinematik des Fahrwerkes die Radwinkel an der Radaufhängung allein durch örtliches Verschieben der Anlenkpunkte der zugeordneten Radlenker im Fahrbetrieb verändert werden. Hierbei reichen die beim Anliegen einer elektrischen Steuerspannung an die Piezokeramik infolge des durch den Piezo-Effekt bewirkten Ausdehnens und Zusammenziehens der Piezokeramik unter Zwischenanordnung eines Kraft-Weg-Übersetzermittels (z. B. Hebel, Keil, o. a.) erzielbaren Hübe von ca. 1 mm aus, die benötigten örtlichen Querverschiebungen der Anlenkpunkte der Radlenker zu erreichen.

Die erfindungsgemäße Anordnung ist überaus vorteilhaft, da sie trocken, d. h. gegenüber hydraulischen Aktuatoren ohne Fluide für das Querverschieben der Anlenkpunkte arbeitet, die bei Leckagen austreten und Emissionen verursachen können. Gegenüber mechanischen Aktuatoren ist die erfindungsgemäße Anordnung verschleißfrei, wartungsfrei und besitzt eine höhere Lebensdauer, da keine großen regelmäßig auftretenden Relativbewegungen zwischen Festkörperoberflächen auftreten, wie z. B. in mechanischen Getrieben oder elektromechanischen Energiewandlern. Die erfindungsgemäße Anordnung benötigt lediglich Linearführungen. Die Anzahl der Bauteile ist pro Anordnung minimal. An der als Aktuator wirkenden Piezokeramik selbst sind zur Ansteuerung nur zwei elektrische Kontakte nötig, sodass auch der Systemaufwand gering ist. Die elektrischen Steuersignale können direkt an die Piezokeramik gegeben werden; Umwege über elektromechanische oder hydraulische Signal- und Energiewandler entfallen. Das der Piezokeramik eigene außerordentlich hohe Verhältnis von Kraftwirkung im Verhältnis zum Energieaufwand der Steuerimpulse ist ebenfalls vorteilhaft für die mechanische Ausbildung der erfindungsgemäßen Anordnung.

Die lageveränderliche Anlenkung der Radlenker einer Radaufhängung bei Kraftfahrzeugen ist an sich bekannt, wie dies z. B. DE 43 27 021 und DE 195 28 790 zeigen. Dort handelt es sich aber um Anordnungen, die es ermöglichen, von einer bei der Serienmontage angestrebten Mittellage nach beiden Seiten abweichende exzentrische Lagen der Anlenkpunkte auf einfache Weise dauerhaft fixieren zu können, wie dies z. B. zur Korrektur einer durch Kollision bewirkten Veränderung von Sturz und Nachlauf der einzelnen Räder des Fahrzeuges notwendig ist.

Die Erfindung ist nachfolgend anhand eines mehr oder minder schematisch dargestellten Ausführungsbeispieles beschrieben und zwar unter Verwendung eines an sich bekannten Elastomerlagers eines ebenfalls an sich bekannten Radlenkers eines nicht dargestellten Fahrwerkes eines Kraftfahrzeuges.

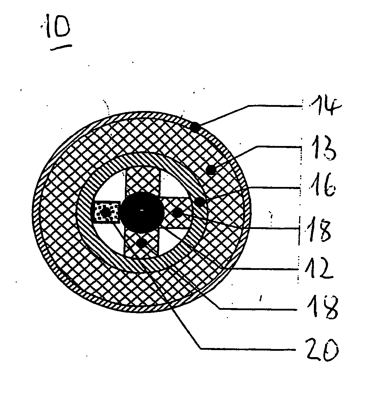

Ein in der einzigen Figur im Querschnitt dargestelltes an sich bekanntes radialsymmetrisches Elastomerlager 10 weist einen als Anlenkpunkt eines nicht dargestellten Fahrwerklenkers einen Lagerbolzen 12 - der Lagerkern - als Teil der Radaufhängung eines ebenfalls nicht dargestellten Kraftfahrzeug-Fahrwerkes auf. Solche Rad- oder Radführungslenker sind beispielsweise in Figur 1 der genannten DE 43 27 021 dargestellt. Das Elastomerlager 10 besteht aus einer Außenhülse 14 und einer Innenhülse 16, zwischen denen sich einvulkanisiert eine sogenannte Elastomerspur 13 befindet.

In der von der Innenhülse 16 umfassten zylindrischen Kavität ist der in Axialrichtung fixierte, den Anlenkpunkt des Fahrwerklenkers bildende Lagerbolzen 12 mittels elastomerer Stege 18 und einer Piezokeramik 20 im nicht erregten Zustand zentrisch gehalten. Die Anordnung ist hierbei derart getroffen, dass der Lagerbolzen 12 quer zur Achsrichtung möglichst leicht verschieblich, in Achsrichtung aber gut lagefixiert ist. Die elastomeren Stege 18 wirken als mechanische Feder, die im Zusammenwirken mit der Piezokeramik 20 ein Federpaket bilden, das in jeder örtlichen Lage des Lagerbolzens 12 eine ausreichende Vorspannung für diesen zur Verfügung stellen. Auf diese Weise wird der Lagerbolzen innerhalb des Elastomerlagers spielfrei geführt. Wird dagegen an die Piezokeramik 20 eine elektrische Spannung angelegt so wird infolge der Formänderung der Piezokeramik der Lagerbolzen 12 in der zylindrischen Kavität der Innenhülse 16 quer zur Achsrichtung entgegen der Wirkung des Federpaketes verschoben. Dies hat zur Folge, dass ausgehend von der in der Figur dargestellten Ruhelage des Lagerbolzens 12 dieser relativ zur Innenhülse 16 in Querrichtung im vorgegebenen Ausmaß örtlich verschoben wird, was zur gewünschten Änderung von Lenk- und Sturzwinkel des angelenkten Rades führt.

Für die Ansteuerung der Piezokeramik 20 sind hier nicht dargestellte Beschleunigungsmesser in den aufeinander senkrecht stehenden Achsrichtungen x y z des zum Fahrwerk gehörende Kraftfahrzeuges vorgesehen, wobei die x-Richtung der Fahrtrichtung des Kraftfahrzeuges zugeordnet, die y-Richtung quer zur Fahrtrichtung und die z-Richtung nach oben gerichtet sind. Die Signale der Beschleunigungsmesser werden nach vorgegebener Programmierung integriert und über einen Schwellwertschalter in Abhängigkeit vorgegebener Achseinstellwerte in für die Piezokeramik geeignete Stellsignale umgeformt zwecks Durchführung der vorstehend beschriebenen örtlichen Verschiebung der Anlenkpunkte der Radlenker der Radaufhängung des Fahrwerks im vorgegebenen Ausmaß.

Anstelle des vorstehend beschriebenen radialsymmetrischen Elastomerlager sind auch alle anderen bekannten Arten von Elastomerlagern, wie z. B. sogenannte Nierenlager mit radial gespreizter Federkennung oder geschlitzte Lager mit reduzierter Schubkennung verwendbar. Anstelle der gezeigten elastomeren Stege 18 können auch mechanische Federn verwendet werden, wie z. B. Blatt- oder Schraubendruckfedern. Für die Führung des Lagerbolzens 12 quer zur Achsrichtung des Elastomerlagers sind auch der Linearführung dienende Langlöcher möglich. Entscheidend ist allein das der Lagerbolzen 12 aus seiner einer bestimmten Elastokinematik entsprechenden Grundkennung über die Piezokeramik 20 bei deren Erregung örtlich verstellt und nach Wegfall der Erregung in die Ausgangsstellung zurück bewegt wird.

### BEZUGSZEICHENLISTE

- 10: Elastomerlager
- 12: Lagerbolzen
- 13: Elastomerspur
- 14: Außenhülse
- 16: Innenhülse
- 18: Elastomerstege
- 20: Piezokeramik

## Patentansprüche

1. Anordnung für das über ein Steuergerät steuerbare Verändern von Lenk- und/oder Sturzwinkeln eines Rades um kleine Beträge, dessen Radaufhängung Teil eines Kraftfahrzeug-Fahrwerkes ist, mit einem Steuergerät, dessen aktives Bauteil eine mittels Steuersignale erregbare Piezokeramik (20) ist, **dadurch gekennzeichnet, dass** die Piezokeramik (20) als Teil eines den Anlenkpunkt eines Radlenkers lagernden, einen Lagerbolzen (12) umfassenden Elastomerlagers (10) ausgebildet ist, um ein kraftgesteuertes örtliches Verschieben des den Anlenkpunkt bildenden Lagerbolzens (12) quer zur Achsrichtung des Elastormerlagers (10) zu ermöglichen.

2. Anordnung nach den Anspruch 1, **dadurch gekennzeichnet, dass** das Elastomerlager (10) als radialsymmetrisches Lager mit von koaxialer Außen- und Innenhülse (14, 16) umschlossener Elastomerspur (13) ausgebildet ist, und dass der den Anlenkpunkt des Radlenkers bildende in Axialrichtung fixierte Lagerbolzen (12) innerhalb der von einer Innenhülse (14) umschlossenen Kavität mittels Federpaketen (Elastomerstege 18) und mindestens einer Piezokeramik (20) im nicht erregten Zustand zentrisch gehalten ist.

3. Anordnung nach den Ansprüchen 1 und 2, **dadurch gekennzeichnet, dass** der Lagerbolzen (12) über eine Langlochführung quer zur Achsrichtung des Elastomerlagers (10) verschieblich gelagert ist.

4. Anordnung nach einem oder mehreren der vorhergehenden Ansprüchen, **dadurch gekennzeichnet, dass** dem Elastomerlager (10) zwecks Reduzierung von Nebenfederraten mehrere Zwischenhülsen zugeordnet sind.

5. Anordnung nach einem oder mehreren der vorhergehenden Ansprüche, **dadurch gekennzeichnet, dass** das Elastomerlager (10) als Nierenlager ausgebildet ist.

6. Anordnung nach den Ansprüchen 1 bis 5, **dadurch gekennzeichnet, dass** das Steuergerät den aufeinander senkrecht stehenden Achsen (x, y, z) des Kraftfahrzeuges zugeordnete Beschleunigungsmesser, Integrationsstufen sowie ein Schwellwertschalter umfasst zwecks Erzeugung der Ansteuersignale für die Piezokeramik (20).

## Claims

1. Arrangement for changing, by means of an adjustable control device, steering and/or crash angles of a wheel by small amounts, the wheel suspension of which is part of a motor vehicle chassis unit, with a control device the active component part of which is a piezoceramic means that can be actuated by control signals, **characterized in that** the piezo-ceramic means(20) is formed as a section of an articulation point of an elastomeric bearing (10), comprising a bearing pin (12), that supports a wheel guide rod, in order to enable a power-controlled, localized shifting of the bearing pin (10) forming the articulation point, transversely in relation to the axial alignment of the elastomeric bearing (10).

2. Arrangment in accordance with claim 1, **characterized in that** the elastomeric bearing (10) is formed as a radially asymmetrical bearing with an elastomeric channel (13) that is enclosed by coaxial outer and inner bushings (14, 16), and **in that** the bearing pin (12), which is fixed in the axial direction and which forms the articulation point of the wheel guide rod, is held centrally, in the unactuated state, by means of spring sets (elastomeric crosspieces 18), within the cavity surrounded by an inner bushing (14), and by at least one piezo-ceramic element (20).

3. Arrangement in accordance with claims 1 and 2, **characterized in that** the bearing pin (12) is supported such that, by means of an elongated hole guiding means, it can be shifted transversely in relation to the axial direction of the elastomeric bearing (10).

4. Arrangement in accordance with one or more of the above claims, **characterized in that** the elastomeric bearing (10) has several intermediate bushings associated with it in order to reduce secondary spring ratios.

5. Arrangement in accordance with one or more of the preceding claims, **characterized in that** the elastomeric bearing (10) is in the form of a pocket bearing.

6. Arrangement in accordance with claims 1 to 5, **characterized in that** the control device, of the spindles (x, y, z), of the vehicle, standing vertically in relation to each other, comprises integration stages and a threshold value circuit for producing the control signals for the piezo-ceramic element (20).

## Revendications

1. Système pour la modification, réglable à l'aide d'un appareil de commande, d'un angle de braquage et / ou de carrossage d'une roue sur de petites valeurs, dont la suspension de roue est une partie d'un châssis d'un véhicule automobile, avec un appareil de commande, dont la pièce de construction active est une piézocéramique (20) excitable à l'aide de signaux de commande, **caractérisé en ce que**, la piézocéramique est réalisée sous la forme d'une partie d'un palier élastomère (10) logeant le point d'articulation d'une bielle de liaison de roue et englobant le pivot de palier (12), pour permettre un déplacement local à commande assistée du pivot de palier (12) formant le point d'articulation transversalement au sens de l'axe du palier élastomère (10).

2. Système conformément à la revendication 1, **caractérisé en ce que** le palier élastomère (10) est réalisé sous la forme d'un palier radialement symétrique avec un pincement de roue élastomère (13) entouré par une douille extérieure et une douille intérieure coaxiales (14,16), et **en ce que** le pivot de palier (12) formant le point d'articulation de la bielle de liaison de roue, fixé dans le sens axial est, en état non excité, maintenu centré à l'intérieur de la cavité entourée par la douille intérieure (14) au moyen d'un bloc de ressorts (nervure élastomère 18) et d'au moins une piézocéramique (20).

3. Système conformément aux revendications 1 et 2, **caractérisé en ce que** le pivot de palier (12) est logé déplaçable via un guidage par trous longitudinaux transversalement au sens de l'axe du palier élastomère (10).

4. Système conformément à l'une ou plusieurs des revendications précédentes, **caractérisé en ce que** plusieurs douilles intermédiaires sont associées au palier élastomère (10) dans un but de réduction des caractéristiques secondaires de flexibilité.

5. Système conformément à l'une ou plusieurs des revendications précédentes, **caractérisé en ce que** le palier élastomère (10) est réalisé en tant que palier réniforme.

6. Système conformément à l'une des revendications 1 à 5, **caractérisé en ce que** l'appareil de commande comprend des accéléromètres affectés aux axes superposés perpendiculairement (x, y, z) du véhicule automobile, des niveaux d'intégration ainsi qu'un commutateur de valeur seuil dans le but de la génération de signaux d'excitation pour la piézocéramique (20)
